**Europäisches Patentamt**

**European Patent Office**

**Office européen des brevets**

(19)

(11) Veröffentlichungsnummer: **0 039 843**
**B2**

(12) ## NEUE EUROPÄISCHE PATENTSCHRIFT

(45) Veröffentlichungstag der neuen Patentschrift:
08.10.86

(51) Int. Cl.⁴: **H 04 N 5/62**

(21) Anmeldenummer: **81103264.8**

(22) Anmeldetag: **30.04.81**

(54) **Fernsehempfänger mit einem nach dem Differenzträgerverfahren arbeitenden Tonkanal.**

(30) Priorität: **09.05.80 DE 3017760**

(43) Veröffentlichungstag der Anmeldung:
**18.11.81 Patentblatt 81/46**

(45) Bekanntmachung des Hinweises auf die Patenterteilung:
**08.02.84 Patentblatt 84/6**

(45) Bekanntmachung des Hinweises auf die Entscheidung
über den Einspruch:
**08.10.86 Patentblatt 86/41**

(84) Benannte Vertragsstaaten:
**AT BE CH DE FR GB IT LI LU NL SE**

(56) Entgegenhaltungen:
**FR - E - 69 793**
**US - A - 2 505 843**

**Neues von Rohde & Schwarz 77 , April 1977, "Fernseh -
MeBdemodulator AMF 2 mit Hüllkurven- und
Synchrondemodulation" (Hermsdörfer)
Rundfunktechnische Mitteilungen, Jahrgang 19, 1975,
Heft 3, Seiten 91 bis 96
Dr. Roland Best, Lehrbuch "Theorie und Anwendungen
des Phase-Locked-Loops", 1976, Seite 26**

(73) Patentinhaber: **TELEFUNKEN Fernseh und Rundfunk
GmbH, Göttinger Chaussee 76,
D-3000 Hannover 91 (DE)**

(72) Erfinder: **Schmidtmann, Burchard, Ing. grad.,
Meistersingerweg 22, D-3013 Barsinghausen (DE)**

(74) Vertreter: **Einsel, Robert, Dipl.-Ing., TELEFUNKEN
Fernseh und Rundfunk GmbH Göttinger Chaussee 76,
D-3000 Hannover 91 (DE)**

## Beschreibung

In einem Fernsehempfänger ist es bekannt, den Bild-ZF-Träger und den Ton-ZF-Träger über einen gemeinsamen ZF-Verstärker zu führen, in dem die Verstärkung für den Tonträger gegenüber der für den Bildträger abgesenkt ist. Am Ausgang des Videogleichrichters, der als Amplitudendemodulator arbeitet, entsteht dann unter anderem die Differenzfrequenz zwischen Bild-ZF-Träger und Ton-ZF-Träger von 5,5 MHz, die über einen weiteren Verstärker dem FM-Demodulator für den Ton zugeführt wird. Bei dieser sogenannten Intercarrier-Schaltung ist die Tonwiedergabe relativ empfindlich gegenüber Störungen durch das Bildsignal.

Bei den sogenannten Parallelton-Fernsehempfängern werden der Bild-ZF-Träger und der Ton-ZF-Träger über getrennte Verstärkungswege getrennten Demodulatoren zugeführt, so dass sie einander nicht beeinflussen können und gegenseitige Störungen zwischen Bild und Ton nicht mehr auftreten. Diese Schaltung erfordert aber einen zusätzlichen Aufwand.

Es ist auch bekannt (DE-PS 1 138 813), aus dem ZF-Verstärker den Ton-ZF-Träger und den Bild-ZF-Träger selektiv auszukoppeln, den Bild-ZF-Träger von der Modulation durch das Bildsignal zu befreien und dann durch Mischung dieser beiden Träger einen Differenzträger von 5,5 MHz zu gewinnen. Die Beseitigung der vom Bildinhalt abhängigen Modulation erfolgt dabei im wesentlichen durch eine Amplitudenbegrenzung des Bild-ZF-Verstärkers. Bei dieser Schaltung verbleiben aber in dem durch Beseitigung der bildabhängigen Modulation gewonnenen Mischträger immer noch vom Bildinhalt abhängige Phasenschwankungen, die ebenfalls zu Störungen im wiedergegebenen Ton führen können.

Es wäre an sich denkbar, den Mischträger in einem genau auf der Bild-ZF frei schwingenden Oszillator zu erzeugen und dann mit dem modulierten Ton-ZF-Träger zur Gewinnung des Differenzträgers zu mischen. Dann wäre der Mischträger von jeder Amplituden- oder Phasenmodulation befreit. Diese Lösung ist aber aus folgendem Grunde praktisch nicht realisierbar. Durch Mikrophonieerscheinungen und elektrische Einstreuungen von Netz- oder Vertikalablenkteil kommt es zu geringfügigen Frequenzänderungen des Oszillators im Mischteil in der Grössenordnung von einigen hundert Hz, wodurch sich die Frequenzen des Bild-ZF-Trägers und des Ton-ZF-Trägers gleichermassen ändern. Da der Differenzträger durch Mischung dieser beiden Träger gewonnen wird, wirken sich diese Frequenzänderungen im gewonnenen Differenzträger praktisch nicht aus. Wenn jedoch der Ton-ZF-Träger diesen Frequenzschwankungen unterworfen ist, der Mischträger jedoch nicht, entstehen im wiedergegebenen Ton wiederum Störungen durch Änderung der Oszillatorfrequenz.

Es ist auch eine Schaltung bekannt (FR-E-69 793 entsprechend AT-PS 192 974), bei der der Bildträger nur jeweils während der Zeilenrücklaufzeit als Mischträger einer Mischstufe zugeführt und dort mit dem kontinuierlichen modulierten Tonträger gemischt wird. Da der Bildträger nur während der Zeilenrücklaufzeit ausgewertet wird, entsteht am Ausgang der Mischstufe ein vom Bildinhalt unabhängiger Differenzträger. Da der Mischträger jedoch nur während der Zeilenrücklaufzeit vorhanden ist, ist dieser Differenzträger auch nur während der Zeilenrücklaufzeit vorhanden und kann nur während dieser Zeit nach einer Demodulation ein Tonsignal liefern. Dadurch ist die Bandbreite des erzeugten Tonsignals nach dem Abtasttheorem auf die halbe Zeilenfrequenz, also etwa 8 kHz, begrenzt.

Zur Erzeugung eines kontinuierlichen Mischträgers aus dem Bildträger ist es bekannt (DE-Z «Neues von Rohde & Schwarz», Nr. 77, April 1977, Seite 9–13), aus dem während der Zeilenrücklaufzeit vorhandenen Bild-ZF-Träger in einer PLL-Phasenregelschaltung, die einen über ein Siebglied von einer Phasenvergleichstufe geregelten Oszillator aufweist, einen für die Demodulation des Bildträgers dienenden, kontinuierlichen, Mischträger zu erzeugen, dessen Synchronisation während der Zeilenhinlaufzeit aufrechterhalten bleibt, indem die Grenzfrequenz fg des Siebgliedes geringfügig unterhalb der Zeilenfrequenz $f_H$ liegt. Der auf diese Weise erzeugte Mischträger ohne Modulation dient dabei zur Synchronmodulation des mit dem Bildsignal modulierten Bildträgers.

Ein derart gewonnener Mischträger kann grundsätzlich auch als Mischträger dienen, der zusammen mit dem modulierten Ton-ZF-Träger die Ton ZF-Differenzträgerfrequenz (5,5 MHz) erzeugt.

Bei derartigen Schaltungen mit einer PLL-Schleife stellt das Einschwingverhalten zum Erzeugen des Mischträgers ein besonderes Problem dar. Das bedeutet insbesondere, dass die Schaltung eine bestimmte Zeit benötigt, bis der Oszillator der PLL-Phasenregelschaltung in Frequenz und Phase auf den synchronisierenden Träger synchronisiert ist.

Der Erfindung liegt die Aufgabe zugrunde, bei einer Schaltung der beschriebenen Art zur Erzeugung eines Mischträgers aus dem Bild-ZF-Träger das Einschwingverhalten in dem Sinne zu verbessern, dass der synchronisierte Zustand des Oszillators der PLL-Phasenregelschaltung möglichst schnell erreicht wird.

Diese Aufgabe wird durch die im Anspruch 1 beschriebene Erfindung gelöst. Eine vorteilhafte Weiterbildung der Erfindung ist im Anspruch 2 angegeben.

In der genannten Literaturstelle von Rohde & Schwarz wird zwar im nichtsynchronen Zustand zwischen dem Bild-ZF-Träger und dem Mischträger eine Stellgrösse erzeugt, die zur Beschleunigung des Einfangens des Oszillators der Phasenregelschleife ausgenutzt wird. Diese Stellgrösse wird jedoch dort auf andere Weise gewonnen und dient lediglich dazu, die Tastung bis zur Synchronisierung zu überbrücken, jedoch nicht, die Zeitkonstante im PLL-Kreis bis zum Synchronisieren zu verringern. Dort wird zum Einfangen ein zusätzlicher, mit einer Frequenz von 10 Hz arbeitender Suchwobbler verwendet.

Die Erfindung wird an Hand der Zeichnung an einem Ausführungsbeispiel eines Fernsehempfängers für die CCIR-Fernsehnorm beschrieben.

Darin zeigen

Figur 1 ein Blockschaltbild der Erfindung und
Figur 2 Kurven zur Erläuterung der Wirkungsweise.

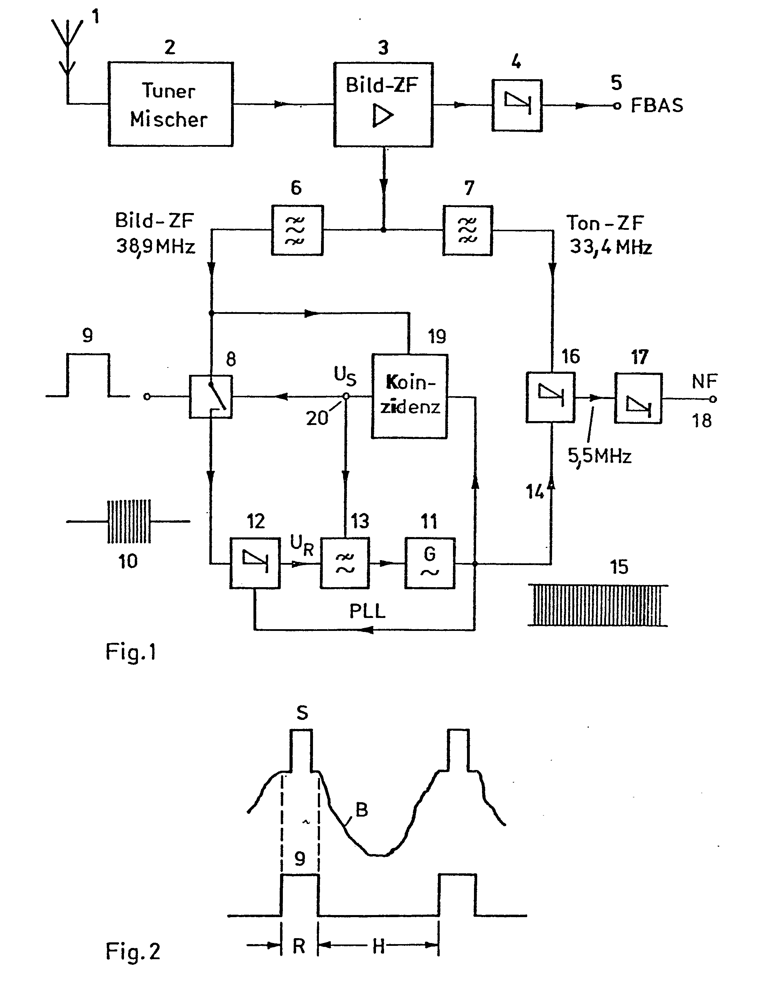

In Fig. 1 speist die Fernseh-Empfangsantenne 1 das HF-Eingangs- und Mischteil 2, das einen Bild-ZF-Träger und einen Ton-ZF-Träger an den Bild-ZF-Verstärker 3 liefert. Dieser liefert über den Amplitudengleichrichter 4 an der Klemme 5 das FBAS-Signal für die Bildwiedergabe. Aus dem Bild-ZF-Verstärker 3 werden mit zwei frequenzselektiven Filtern 6, 7 der Bild-ZF-Träger von 38,9 MHz und der Ton-ZF-Träger von 33,4 MHz voneinander getrennt. Der Bild-ZF-Träger gelangt auf das Tor 8, das durch den Tastimpuls 9 nur während der gesamten Zeilenrücklaufzeit durchlässig ist. Dadurch entstehen am Ausgang des Tores 8 Bild-ZF-Träger-Schwingungen 10, die in Amplitude und Phase nicht vom Bildinhalt B moduliert sind. Die unterschiedliche Amplitude der Schwingungen 10 während des Zeilensynchronimpulses S und der Schwarzschulter ist zur Vereinfachung nicht dargestellt. Die Schwingungen 10 gelangen auf eine Phasenregelschleife (PLL-Schaltung) mit dem Oszillator 11, der Phasenvergleichsstufe 12 und dem Siebglied 13. Diese Schaltung ist so bemessen, dass der Oszillator 11 auf die Frequenz der Schwingungen 10 synchronisiert wird und an der Leitung 14 ein kontinuierlicher Mischträger 15 mit konstanter Amplitude und ohne vom Bildinhalt abhängige Phasenänderungen steht. Frequenzänderungen im Bildträger am Ausgang des Filters 6 aufgrund von Mikrophonieerscheinungen und Einstreuungen vom Netz- oder Vertikalteil wirken sich jedoch in vorteilhafter Weise auf die Frequenz des Mischträgers 15 an der Leitung 14 aus. Zu diesem Zweck liegt die Grenzfrequenz $f_g$ des Siebgliedes 13 geringfügig unterhalb der Zeilenfrequenz $f_H$ von 15,625 Hz.

Der mit dem Tonsignal und entsprechend den Mikrophonieerscheinungen und den anderen genannten Einflüssen in der Frequenz modulierte Tonträger vom Filter 7 und der Mischträger 15 werden in der Mischstufe 16 gemischt. Dadurch entsteht der mit dem Tonsignal in der Frequenz modulierte Differenzträger von 5,5 MHz. Aus diesem wird in dem FM-Demodulator 17 das NF-Tonsignal an der Klemme 18 gewonnen und weiteren NF-Verstärkern und dann dem Lautsprecher zugeführt.

Um den synchronisierten Zustand des Oszillators 11, d.h. Übereinstimmung der Frequenz der Schwingungen 10 und 15 möglichst schnell zu erreichen, ist die Koinzidenzstufe 19 vorgesehen. Dieser werden der Bild-ZF-Träger von 38,9 MHz und der Mischträger 15 zugeführt. Wenn die Frequenzen dieser beiden Spannungen nicht übereinstimmen, der Oszillator 11 also noch nicht synchronisiert ist, entsteht an der Ausgangsklemme 20 eine Stellgrösse Us, die zweierlei bewirkt. Einmal steuert sie das Tor 8 ständig durchlässig, so dass nun ein kontinuierlicher ununterbrochener Bild-ZF-Träger auf die Phasenvergleichsstufe 12 gelangt und somit das Einfangen des Oszillators 11 erleichtert wird. Ausserdem wird die Zeitkonstante des Siebgliedes 13, d.h. seine untere Grenzfrequenz, durch die Stellgrösse Us beträchtlich verringert, z.B. das Siebglied 13 vollständig überbrückt. Dadurch kann sich die dem Oszillator 11 zugeführte Regelspannung $U_R$ schnell ändern und schnell den synchronisierten Zustand herstellen. Diese beiden Massnahmen, die ununterbrochene Zuführung des Bild-ZF-Trägers zur Phasenvergleichsstufe 12 und die Verringerung der Wirksamkeit des Siebgliedes 13, gewährleisten also, dass der synchronisierte Zustand des Oszillators 11 schnell erreicht wird. Sobald dieser Zustand erreicht ist, verschwindet die Stellgrösse Us, so dass nunmehr in erwünschter Weise nur noch die getasteten Schwingungen 10 auf die Phasenvergleichsstufe 12 gelangen und im Weg der Regelspannung $U_R$ die genannte grössere Zeitkonstante wirksam ist.

Fig. 2 zeigt den Tastimpuls 9 für das Tor 8 mit der Dauer der Zeilenrücklaufzeit R, in der die Schwingungen 10 zur Phasenvergleichsstufe 12 gelangen. Während der Zeilenhinlaufzeit H wird das Bildsignal B von der Phasenvergleichsstufe 12 ferngehalten. Die Synchronisierung des Oszillators 11 erfolgt dann durch die mit dem Siebglied 13 aufrechterhaltene, an sich nur während der Rücklaufzeit R gewonnene Regelspannung $U_R$.

## Patentansprüche

1. Fernsehempfänger mit einem nach dem Differenzträgerverfahren arbeitenden Tonkanal, bei dem die Differenzträgerfrequenz (5,5 MHz) durch Mischung des Ton-ZF-Trägers (33,4 MHz) mit einem Mischträger (15) erzeugt wird, der nur jeweils während der Zeilenrücklaufzeit (R) aus dem während dieser Zeit vom Bildinhalt nicht modulierten Bild-ZF-Träger (38,9 MHz) gewonnen wird, gekennzeichnet durch folgende Merkmale:

a) aus dem während der Zeilenrücklaufzeit vorhandenen Bild-ZF-Träger (10) wird in einer PLL-Phasenregelschaltung, die einen über ein Siebglied (13) von einer Phasenvergleichsstufe (12) geregelten Oszillator (11) aufweist, ein kontinuierlicher Mischträger (15) erzeugt wird, dessen Synchronisation während der Zeilenhinlaufzeit (H) aufrechterhalten bleibt, wobei die Grenzfrequenz $f_g$ des Siebgliedes (13) geringfügig unterhalb der Zeilenfrequenz $f_H$ liegt;

b) der kontinuierliche Bild-ZF-Träger (38,9 MHz) und der Mischträger (15) sind an die Eingänge einer Koinzidenzschaltung (19) angelegt, deren im nichtsynchronen Zustand der Eingangsspannungen am Ausgang auftretende Stellgrösse (Us) zur Beschleunigung des Einfangens des Oszillators der Phasenregelschleife ausgenutzt ist, indem die Stellgrösse (Us) eine Verringerung der Zeitkonstante des Siebgliedes (13) der Phasenregelschaltung (11–13) steuert.

2. Empfänger nach Anspruch 1, dadurch gekennzeichnet, dass die Stellgrösse (Us) den Bild-ZF-Träger (38,9 MHz) ohne Unterbrechung auf die PLL-Schaltung (11–13) zur Gewinnung des Mischträgers (15) durchschaltet.

## Claims

1. Television receiver having a sound channel which operates on the intercarrier method, in which the intercarrier frequency (5.5 MHz) is achieved by mixing the sound intermediate frequency carrier (33.4 MHz) with a mixing carrier (15) which is extracted from the picture intermediate frequency carrier (38.9 MHz) which is not modulated during this time by the picture content, characterized by the following features:

a) a continuous mixing carrier is derived from the picture intermediate frequency carrier (10), present during the line return time, in a PLL-phase control circuit which possesses an oscillator (11) controlled by way of a filter (13) of a phase comparison stage (12), the synchronisation of the mixing carrier being maintained during the line scan time (H), with regard to which the cut off frequency fg of the filter (13) lies slightly below the line frequency;

b) the continuous picture intermediate frequency carrier (38.9 MHz) and the mixing carrier (15) are applied to the inputs of a coincidence circuit (19) whereof the regulating magnitude (Us), arising at the output in the non-synchronised condition of the input voltages, is utilised for the acceleration of the pull-in of the oscillator of the phase control loop, in that the regulating magnitude (Us) induces a reduction of the time constant of the filter (13) of the phase control circuit (11–13).

2. Receiver according to Claim 1, characterized in that the regulating magnitude (Us) switches the picture intermediate frequency carrier (38.9 MHz) through to the PLL-circuit (11–13) without interruption for the extraction of the mixing carrier (15).

## Revendications

1. Récepteur de télévision comprenant un canal son qui travaille selon le procédé interporteuse, dans lequel la fréquence (5,5 MHz) de l'interporteuse est produite par mélange de la porteuse son FI (33,4 MHz) avec une porteuse mixte (15) qui est seulement produite pendant le temps de retour de balayage horizontal (R) à partir de la porteuse image FI (38,9 MHz), laquelle n'est pas modulée pendant ce temps par le contenu de l'image, caractérisé en ce que:

a) dans un circuit PLL de réglage de phase, comprenant un oscillateur (11) réglé par un étage comparateur de phases (12) à travers un élément filtrant (13), une porteuse mixte continue (15) est produite à partir de la porteuse image FI (10) présente pendant le temps de retour de balayage horizontal, porteuse mixte dont la synchronisation est maintenue pendant le temps d'aller (H) du balayage horizontal, la fréquence limite $f_g$ de l'élément filtrant (13) étant légèrement inférieure à la fréquence de lignes $f_H$;

b) la porteuse image FI continue (38,9 MHz) et la porteuse mixte (15) sont appliquées aux entrées d'un circuit de coïncidence (19) qui, lorsque ses tensions d'entrée ne sont pas synchronisées, fournit à la sortie une variable réglante (Us) pour accélérer la synchronisation de l'oscillateur (11) de la boucle de réglage de phase, du fait que la variable réglante (Us) commande une diminution de la constante de temps de l'élément filtrant (13) du circuit de réglage de phase (11–13).

2. Récepteur selon la revendication 1, caractérisé en ce que la variable réglante (Us) fait passer la porteuse image FI (38,9 MHz) directement, sans interruption, au circuit PLL (11–13) en vue de l'obtention de la porteuse mixte (15).

Fig.1

Fig.2